# EUROPEAN PATENT SPECIFICATION

(11) **EP 4 035 532 B1**
(45) Date of publication and mention of the grant of the patent: **13.09.2023**
(21) Application number: 20957907.7
(22) Date of filing: 20.11.2020
(51) Int. Cl.: A21B 5/04, F24C 7/04

(54) **BAUMKUCHEN BAKER AND CONTROL METHOD THEREOF**
BAUMKUCHENBACKER UND STEUERVERFAHREN DAFÜR
RÔTISSOIRE À GÂTEAUX BAUMKUCHEN ET SON PROCÉDÉ DE COMMANDE

(43) Date of publication of application: 03.08.2022
(60) Divisional application: 23187492.6
(73) Proprietor: Juchheim Co., Ltd., Kobe-shi, Hyogo 650-0046 (JP)
(72) Inventor: KAWAMOTO, Hideo, Kobe-shi, Hyogo 650-0046 (JP)
(74) Representative: J A Kemp LLP
(86) International application number: PCT/JP2020/043372
(87) International publication number: WO 2022/107306

(56) References cited:
- DE-A1-102010 002 692
- JP-A- H 089 932
- JP-A- H 089 932
- JP-A- 2001 272 045
- JP-A- 2006 129 781
- JP-A- 2006 129 781
- KR-Y1- 200 488 217

## Description

### TECHNICAL FIELD

The present invention relates to a technique for controlling a Baumkuchen baking machine.

### BACKGROUND ART

A Baumkuchen baking machine rotates a rotating spit in its oven, where the rotating spit has Baumkuchen batter applied thereto. This allows the outer peripheral surface of the batter to be baked generally uniformly around its entire circumference. When the outer peripheral surface has been properly baked, the Baumkuchen baking machine applies another layer of batter thereto, and again rotates the spit in the oven. Repeating application of batter, rotation in the oven, and baking of the outer peripheral surface of the batter during its rotation in the oven results in a Baumkuchen (or "tree cake") featuring layers that look like growth rings.

The doneness of a Baumkuchen is important as it significantly affects the cake's quality. Traditionally, a skilled person operates the Baumkuchen baking machine to bake a Baumkuchen with the appropriate doneness.

For example, Japanese Patent No. 6429138 (Patent Document 1) discloses a food production apparatus capable of automatically producing generally ball-shaped baked food from batter of grain flour, such as takoyaki (or "octopus dumplings"), with improved quality. The food production apparatus includes: a heating plate with recesses in which batter is to be poured; a robot arm; an image-capturing unit; and a controller. The controller divides a digital image into a plurality of areas that are each associated with a recess, analyzes the digital batter image for each area to determine the shape and/or color of the associated piece of batter, and determines the degree of completion of the piece based on its shape/color. The controller changes the priority for each area. Based on the resulting priorities, the controller operates the robot arm to touch the surfaces of the relevant pieces of batter to move and/or remove them.

### PRIOR ART DOCUMENTS

### PATENT DOCUMENTS

[Patent Document 1] Japanese Patent No. 6429138

### SUMMARY OF THE INVENTION

### PROBLEMS TO BE SOLVED BY THE INVENTION

With conventional techniques, it is difficult to determine the doneness of each batter layer of a Baumkuchen rotating in the oven in an automated manner. A Baumkuchen baking machine brushes layers of batter on the rotating spit on top of one another and bakes each layer while rotating the roller. In such an arrangement, it is important how to control the baking of each one of the batter layers. Baking a delicious Baumkuchen requires a skilled person to control the Baumkuchen baking machine.

In view of this, the present disclosure discloses an apparatus, a method and a program for automatically controlling a Baumkuchen baking machine that can achieve the appropriate doneness of each layer of a Baumkuchen rotating in the oven, and such a Baumkuchen baking machine. DE 10 2010 002692 discloses a Baumkuchen baking machine as background art to the invention.

### MEANS FOR SOLVING THE PROBLEMS

According to a first aspect of the invention there is provided a Baumkuchen baking machine and a method for controlling a Baumkuchen baking machine as specified in the claims.

### EFFECTS OF THE INVENTION

The present disclosure enables automatically controlling a Baumkuchen baking machine to achieve the appropriate doneness of each layer of a Baumkuchen rotating in the oven.

### BRIEF DESCRIPTION OF THE DRAWINGS

[FIG. 1] FIG. 1 is a front view of a Baumkuchen baking machine according to an embodiment.
[FIG. 2] FIG. 2 is a side view of the Baumkuchen baking machine shown in FIG. 1.
[FIG. 3] FIG. 3 shows the machine with the roller 3 located at the batter application position.
[FIG. 4] FIG. 4 is a functional block diagram illustrating an exemplary configuration of the control apparatus constituted by the computer 8.
[FIG. 5] FIG. 5 is a flow chart illustrating an exemplary process for controlling the Baumkuchen baking machine 1 performed by the computer 8.
[FIG. 6] FIG. 6 shows an example of an image captured by the camera 7.
[FIG. 7] FIG. 7 illustrates an exemplary configuration of a neural network used for the decision process.
[FIG. 8] FIG. 8 shows an example of a group of images acquired by the computer 8 from the initiation until the completion of baking.
[FIG. 9] FIG. 9 is a flow chart illustrating an exemplary process for collecting teaching data for the learning process based on the baking operation on the Baumkuchen baking machine 1.

### EMBODIMENTS FOR CARRYING OUT THE INVENTION

### (Arrangement 1)

An apparatus for controlling a Baumkuchen baking machine according to an embodiment of the present invention is an apparatus for controlling a Baumkuchen baking machine including an oven, a batter container, and a roller capable of moving between a baking position for the oven and a batter application position for applying batter in the batter container to batter on the roller. The control apparatus includes a computer adapted to control movement of the roller having layered batter of a Baumkuchen thereon from the batter application position to the baking position for the oven and movement of the roller from the baking position for the oven to the batter application position. The computer is configured to perform: an image acquisition process for acquiring, from a camera photographing a portion of an outer peripheral surface of the layered batter of a Baumkuchen on the roller, a group of images of the outer peripheral surface of the batter rotating together with the roller at the baking position for the oven, the group of images covering at least one entire turn; and a decision process for deciding on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

In Arrangement 1, the computer acquires, from the camera, a group images of the outer peripheral surface of the batter of a Baumkuchen rotating at the baking position for the oven, the group of images covering at least one entire turn. The group of images contain information about the entire circumference of the outer peripheral surface of the batter of the Baumkuchen baked in the oven. Based on the baked color of the outer peripheral surface of the batter indicated by the group of images, the computer decides on a point of time at which the roller is to be moved from the baking position for the oven to the batter application position. This enables moving the roller from the baking position to the batter application position for application of batter on the outer peripheral surface when the doneness of the outer peripheral surface of the Baumkuchen baked in the oven is just right around the entire circumference. That is, the baking time is controlled so as to achieve the appropriate degree of baking of each layer. Thus, the Baumkuchen baking machine is automatically controlled so as to achieve the appropriate doneness of each layer of the Baumkuchen rotated in the oven.

In Arrangement 1, in the decision process, the computer may use a learning-enhanced model obtained by machine learning to decide on the point of time at which the roller is to be moved from the baking position for the oven to the batter application position. The learning-enhanced model may be, for example, generated by machine learning where previous images of the outer peripheral surface of batter and the degree of baking (i.e., doneness) determined from those images provide teaching data. For example, the learning-enhanced model may be data that, when receiving images of the outer peripheral surface of batter are input, enables outputting of the doneness determined based on the baked color indicated by the images.

In the decision process, the computer may use a learning-enhanced model to determine the doneness based on the group of images acquired. For example, the computer may successively determine the doneness of each of the images in the group and, when the doneness determined from the images satisfies a predetermined requirement, determine that the roller is to be moved from the baking position to the batter application position. The use of a learning-enhanced model makes it possible to determine doneness in the same manner in which doneness is determined based on previously acquired images. This may, for example, allow the determination of doneness by a skilled person to be reproduced.

### (Arrangement 2)

Starting from Arrangement 1, the computer may be configured to further perform: a determination estimation process for estimating a result of a determination by an operator regarding a doneness of the batter of a Baumkuchen based on an operation of the Baumkuchen baking machine by the operator; and a learning process for generating a learning-enhanced model to be used in the decision process by means of machine learning using, as teaching data, the estimated result of the determination by the operator and a group of images of the outer peripheral surface of the batter at the baking position for the oven covering at least one entire turn in a period of time including a time of the determination.

Machine learning that uses, as teaching data, the determination of doneness by the operator and the group of images captured in a period of time including the time of determination enables learning of determination of doneness by the operator. The use of a learning-enhanced model obtained by such machine learning makes it possible to determine doneness based on images of the outer surface of batter in the same manner in which the operator does. This will enable decision on a time at which the roller having layered batter thereon is to be moved from the baking position to the batter application position based on the proper determination of doneness.

In the determination estimation process, the computer may, for example, estimate the determination of doneness by the operator based on whether there was an operation by the operator to move the roller having layered batter of a Baumkuchen thereon from the baking position to the batter application position. Generally, an operation by the operator to move the roller having layered batter of a Baumkuchen from the baking position to the batter application position occurs when the operator has determined that the doneness of the batter is appropriate. As such, an operation by the operator to move the roller reflects a determination of doneness.

Machine learning may be, for example, deep learning using a neural network. In such implementations, the learning-enhanced model may be, for example, a data set that, when images are input, enables outputting of a determination of doneness (for example, a value indicating doneness or whether the doneness is appropriate). The data set includes, for example, parameters that indicate weightings connecting different layers in the neural network and have been adjusted by machine learning. In other implementations, the machine learning may not use a neural network. For example, the learning-enhanced model may be generated by machine learning using regression analysis or decision tree. Examples of such machine learning techniques include, for example, linear regression, support vector machine, support vector regression, elastic net, logistic regression, random forest and other techniques.

### (Arrangement 3)

Starting from Arrangement 1 or 2, when acquiring the images, the computer may further acquire at least one of a rotational speed of the layered batter of a Baumkuchen on the roller, a baking time for the outer surface of the batter of a Baumkuchen, and a temperature in the oven. In the decision process, the computer may perform the decision based on at least one of the acquired rotational speed, the acquired baking time for the outer surface of the batter of a Baumkuchen, and the acquired temperature in the oven, in addition to the baked color of the outer peripheral surface of the batter indicated by the group of images. Using at least one of rotational speed, baking time and temperature enables determination that considers the influence of at least one of rotational speed, baking time and temperature on doneness. This will enable control of the time at which the roller is to be moved from the baking position to the batter application position such that the doneness is even more appropriate.

The rotational speed may be, for example, the rotational speed of the roller, or may be the speed of circumferential movement of the outer surface of the batter. The temperature in the oven may be, for example, the surface temperature of the outer surface of the batter, the temperature of air inside the oven, the temperature of the heat source of the oven, or the like. Baking time for the outer surface of batter means the baking time for one layer of batter. For example, the elapsed time from the time at which the roller moved to the baking position for the oven from the batter application position may be treated as the baking time.

The Baumkuchen baking machine may include at least one of a rotation sensor that detects rotation of the roller about its axis, a temperature sensor that detects the temperature in the oven, and a timer that measures baking time. The computer may be configured to acquire at least one of the rotational speed detected by the rotation sensor, the temperature detected by the temperature sensor, and the baking time measured by the timer.

### (Arrangement 4)

Starting from Arrangement 2 or 3, in the learning process, the computer may generate the learning-enhanced model further using at least one of the rotational speed of the layered batter of a Baumkuchen on the roller, the baking time for the outer surface of the batter of a Baumkuchen, and the temperature in the oven in the period of time including the time of the determination based on the operation by the operator. Thus, since at least one of rotational speed, baking time and temperature in addition to images of the outer peripheral surface of the batter provides teaching data, a learning-enhanced model will be obtained that enables a more appropriate determination of doneness.

### (Arrangement 5)

In the decision process, the computer may acquire at least one of a speed of circumferential movement of the outer peripheral surface of the layered batter of a Baumkuchen on the roller, and a diameter of the outer periphery of the layered batter of a Baumkuchen on the roller. In the decision process, the computer may perform the decision based on at least one of the acquired speed of movement and the acquired diameter in addition to the baked color of the outer peripheral surface of the batter indicated by the group of images.

As the number of batter layers on the roller increases, the diameter of the batter increases. As the diameter of the batter increases, the speed of circumferential movement of the outer peripheral surface of the batter increases even when the rotational speed of the roller remains the same. Using the speed of circumferential movement of the outer peripheral surface of the batter or the diameter of the outer periphery of the batter in the decision enables a decision that considers the differences in baking conditions due to the layering of the batter. As a result, it is possible to control the time at which the roller is to be moved from the baking position to the batter application position so as to achieve an even more appropriate doneness.

For example, the computer may calculate the speed of circumferential movement of the outer peripheral surface of the batter based on the diameter of the outer periphery of the layered batter on the roller and the rotational speed of the roller. The diameter of the outer periphery of the batter may be obtained, for example, by measuring the diameter of the batter in images in which the entire diameter of the layered batter on the roller is recognizable.

### (Arrangement 6)

In the learning process, the computer may generate the learning-enhanced model further using at least one of a speed of circumferential movement of the outer peripheral surface of the layered batter of a Baumkuchen on the roller, and a diameter of the outer periphery of the batter of a Baumkuchen in the period of time including the time of the determination by the operator regarding the doneness. This will enable generation of a learning-enhanced model that reflects differences in baking conditions due to the layering of the batter.

A Baumkuchen baking machine including the control apparatus of any one of Arrangements 1 to 6 is encompassed by the embodiments of the present invention.

### (Arrangement 7)

A Baumkuchen baking machine according to an embodiment of the present invention includes: an oven; a batter container; a roller capable of moving between a baking position for the oven and the batter container; a camera adapted to photograph a portion of an outer peripheral surface of layered batter of a Baumkuchen on the roller; and a control apparatus including a computer. The computer is adapted to control movement of the roller having the layered batter of a Baumkuchen thereon from a batter application position for applying batter in the batter container to batter on the roller to the baking position for the oven and movement of the roller from the baking position for the oven to the batter application position. The computer is configured to perform: an image acquisition process for acquiring, from the camera, a group of images of the outer peripheral surface of the batter rotating together with the roller at the baking position for the oven, the group of images covering at least one entire turn; and a decision process for deciding on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

In the above-described Baumkuchen baking machine, the camera may be positioned so as to photograph a portion of the outer peripheral surface of the layered batter on the roller that extends part of its axial dimension. This will enable obtaining images suitable for determining the doneness of the outer peripheral surface of the rotating Baumkuchen batter by means of a simple arrangement.

The camera may be positioned, for example, so as to capture an image in which the entire diameter of the layered batter on the roller at the baking position is recognizable. The computer may acquire an image of a portion of the batter covering part of the diameter, cut out from the image captured by the camera. In such implementations, the computer performs the decision process using an image of a portion of the batter covering part of the diameter. Since an image of a portion of the batter covering part of the diameter is used, that portion of an image of the batter covering the entire diameter which best shows doneness in terms of color can be used for the decision. This will enable an even more appropriate decision.

The camera may be a single camera, or may be constituted by a plurality of cameras. The optical axis of the camera may be positioned to cross the axial direction of the roller. The camera may be positioned, for example, outside the oven so as to photograph the outer surface of the batter in the oven through a window in the oven. Further, the camera and roller may be configured such that the position of the optical axis of the camera relative to the roller at the baking position for the oven is fixed. This enables fixing the conditions under which the camera photographs the batter at the baking position. In addition to the position of the optical axis relative to the rolling roll at the baking position for the oven, the relative position of the heater of the oven may also be fixed.

The Baumkuchen baking machine of Arrangement 7 may include a moving mechanism adapted to move the roller between the baking position for the oven and the batter container. The moving mechanism may include, for example, a support member for rotatably supporting the shaft of the roller and an actuator for moving the shaft of the roller supported by the support member. The support member may be, for example, a movable arm or a guide, such as a rail. The actuator may be, for example, a motor, a hydraulic cylinder or other power sources.

The movable arm may be constructed such that one of its ends is rotatably supported on the Baumkuchen baking machine by means of a prevent shaft and the other end rotatably supports the rotating shaft of the roller. In such implementations, the actuator may include a motor for rotating the movable arm about the pivot shaft. For example, a pair of movable arms may be provided that rotatably support both ends, as determined along the axial direction, of the roller.

In the moving mechanism, movement of the roller from the baking position for the oven to the batter application position may be the operation of moving at least one of the roller and batter container to bring them closer to each other. For example, the roller may be moved closer to the batter container, or the batter container may be moved closer to the roller.

The moving mechanism is controlled by the computer. For example, the computer may control the movement of the roller between the baking position for the oven and the batter application position by controlling the drive of the actuator included in the moving mechanism.

A method for controlling a Baumkuchen baking machine according to an embodiment of the present invention is a method for controlling a Baumkuchen baking machine including an oven, a batter container, and a roller capable of moving between a baking position for the oven and the batter container. The control method includes a control step in which the computer controls movement of the roller having layered batter of a Baumkuchen thereon from a batter application position for applying batter in the batter container to batter on the roller to a baking position for the oven, and movement of the roller from the baking position for the oven to the batter application position. In the control step, the computer performs: an image acquisition process for acquiring, from a camera photographing a portion of an outer peripheral surface of the layered batter of a Baumkuchen on the roller, a group of images of the outer peripheral surface of the batter rotating together with the roller at the baking position for the oven, the group of images covering at least one entire turn; and a decision process for deciding on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

A method for controlling a Baumkuchen baking machine according to an embodiment of the present invention is a method for controlling a Baumkuchen baking machine including an oven, a batter container, and a roller capable of moving between a baking position for the oven and the batter container. The control method includes: a determination estimation step in which a computer estimates a result of a determination by an operator regarding a doneness of batter of a Baumkuchen based on an operation by the operator of the Baumkuchen baking machine; and a learning step in which the computer generates a learning-enhanced model to be used in a decision process by means of machine learning using, as teaching data, the estimated result of the determination by the operator and a group of images of an outer peripheral surface of the batter at the baking position for the oven, the group of images associated with at least one turn in a period of time including a time of the determination. The learning-enhanced model is data to be used in the decision process in which the computer decides on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

A program for controlling a Baumkuchen baking machine according to an embodiment which does not form part of the present invention a program for controlling a Baumkuchen baking machine including an oven, a batter container, and a roller capable of moving between a baking position for the oven and the batter container. The control program causes a computer to perform a control process in which the computer controls movement of the roller having layered batter of a Baumkuchen thereon from a batter application position for applying batter in the batter container to the roller to a baking position for the oven, and movement of the roller from the baking position for the oven to the batter application position. The control process includes: an image acquisition sub-process for acquiring, from a camera photographing a portion of an outer peripheral surface of the layered batter of a Baumkuchen on the roller, a group of images of the outer peripheral surface of the batter rotating together with the roller at the baking position for the oven, the group of images associated with at least one turn; and a decision sub-process for deciding on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

A program for controlling a Baumkuchen baking machine according to an embodiment which does not form part of the present invention is a program for controlling a Baumkuchen baking machine including an oven, a batter container, and a roller capable of moving between a baking position for the oven and the batter container. The control program causes a computer to perform: a determination estimation process for estimating a result of a determination by an operator regarding a doneness of batter of a Baumkuchen based on an operation by the operator of the Baumkuchen baking machine; and a learning process for generating a learning-enhanced model to be used in a decision process by means of machine learning using, as teaching data, the estimated result of the determination by the operator and a group of images of an outer peripheral surface of the batter at the baking position for the oven, the group of images associated with at least one turn in a period of time including a time of the determination. The learning-enhanced model is data to be used in the decision process in which the computer decides on a point of time at which the roller is to be moved from the baking position for the oven to the batter application position based on a baked color of the outer peripheral surface of the batter indicated by the group of images of the outer peripheral surface of the batter at the baking position for the oven covering at least one entire turn.

### [Embodiments]

Now, embodiments will be described with reference to the drawings. The same and corresponding components in the drawings are labeled with the same reference characters, and will not be described repeatedly. For ease of explanation, components in the drawings referred to below may be simplified or shown schematically, or some components may be omitted.

### (Exemplary Construction of Baumkuchen Baking Machine)

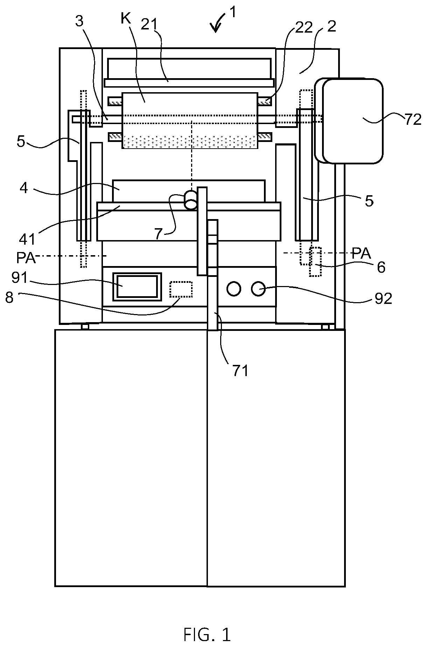

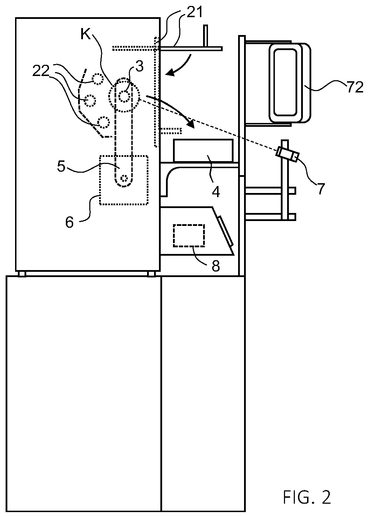

FIG. 1 is a front view of a Baumkuchen baking machine according to an embodiment. FIG. 2 is a side view of the Baumkuchen baking machine shown in FIG. 1. The Baumkuchen baking machine 1 shown in FIGS. 1 and 2 includes: an oven 2; a roller 3 on which Baumkuchen batter layers can be brushed on top of one another and that can rotate; a batter container 4 that contains Baumkuchen batter before baking; a moving mechanism (denoted by 5 and 6) that moves the roller 3 between a baking position for the oven and a batter application position; and a computer 8 constituting the control apparatus that controls the operation of the Baumkuchen baking machine.

The Baumkuchen baking machine 1 further includes a camera 7, as well as an illuminator 72 and various sensors (not shown in FIG. 1). The various sensors may include, for example, at least one of a temperature sensor that measures the temperature in the oven, a rotation sensor that detects the rotational speed of the layered Baumkuchen batter on the roller 3, and a timer that measures the baking time for the Baumkuchen batter.

The camera 7 is positioned so as to be able to photograph a portion of the outer surface of the layered Baumkuchen batter W on the roller 3 located at the baking position. The optical axis of the camera 7 crosses the outer surface of the Baumkuchen batter W. The camera 7 is supported by a support member 71. The support member 71 fixes the position of the optical axis of the camera 7 relative to the roller 3 at the baking position. The illuminator 72 illuminates a region included in the area covered by the camera 7.

The camera 7 captures a plurality of images of the outer surface covering at least one entire turn of the roller 3 having the layered Baumkuchen batter W thereon. For example, the camera 7 captures a video of the rotating Baumkuchen batter W. This produces a group of images of the outer peripheral surface of the Baumkuchen batter covering at least one entire turn.

The oven 2 is a heating furnace provided with a heater 22 located therein. The oven 2 includes a window 21 that can be opened and closed. The batter container 4 is located in front of the window 21. The batter container 4 is placed on a stand 41.

In the implementation shown in FIGS. 1 and 2, the layered Baumkuchen batter on the roller 3 is located at the baking position inside the oven 2. Both ends of the roller 3 are rotatably supported by a pair of arms 5. The roller 3 is rotated by a motor (not shown), for example. The computer 8 controls the motor to control the rotation of the roller 3.

The pair of arms 5 are attached to the Baumkuchen baking machine 1 so as to be rotatable about a pivot shaft PA. An actuator 6 is connected to the arms 5. The actuator 6 drives the arms 5 to rotate. The actuator 6 is a motor, for example. The drive of the actuator 6 is controlled by the computer 8. The computer 8 controls the drive of the actuator 6 to control the rotation of the arms 5. By controlling the rotation of the arms 5, the position of the roller 3 is controlled. In the present implementation, the arms 5 and actuator 6 constitute the moving mechanism for the roller 3.

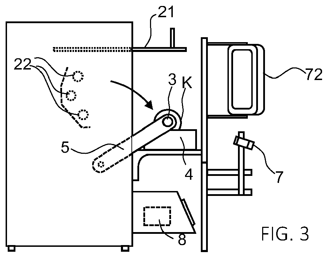

The computer 8 controls the position of the roller 3 to move the roller 3 having the layered Baumkuchen batter K thereon between the batter application position and the baking position for the oven 2. The batter application position is the position at which batter in the batter container 4 is applied to batter on the roller 3. FIG. 3 shows the roller 3 as located at the batter application position. The batter application position is located above the batter container 4. As the roller 3 at the batter application position is rotated, the outer peripheral surface of the layered Baumkuchen batter K on the roller 3 receives further batter applied thereto. The detection of the position of the roller 3 by the computer 8 is not limited to any particular configuration. For example, a position detection sensor may be provided on the Baumkuchen baking machine 1 for detecting the position of the roller 3 or arms 5. Alternatively, the computer 8 may be configured to detect the position of the roller 3 based on the operation of the actuator 6.

The computer 8 causes the roller 3 at the batter application position to rotate by at least one turn to apply one layer of Baumkuchen batter K to the roller 3. The computer 8 causes the roller 3 having Baumkuchen batter K applied thereto to move from the batter application position to the baking position of the oven 2. This initiates the baking of the one layer of batter that has just been applied.

The computer 8 acquires, from the camera 7, a group of images of the outer peripheral surface of the Baumkuchen batter rotating together with the roller 3 at the baking position for the oven 2, the group of images covering at least one entire turn. The computer 8 determines the doneness of the outer peripheral surface of the Baumkuchen batter based on the baked color of the outer surface as indicated by the group of images captured by the camera 7. The computer 8 decides on a point of time at which the roller 3 is to be moved from the baking position for the oven 2 to the batter application position based on the determined doneness. Thus, the roller 3 can be moved from the baking position for the oven 2 to the batter application position if the doneness is determined to be good. As the roller 3 is moved from the baking position for the oven 2 to the batter application position, baking is terminated. That is, the computer 8 determines the doneness of one layer of Baumkuchen batter and controls the baking time for that one layer of batter so as to achieve the appropriate doneness.

The computer 8 repeats a plurality of times the operations of controlling the position of the roller 3, applying Baumkuchen batter and baking it in the oven 2. Thus, a plurality of Baumkuchen batter layers are baked. For each layer to be baked, the baking time is controlled so as to achieve the appropriate doneness based on the images from the camera 7.

### (Exemplary Configuration of Control Apparatus (Computer))

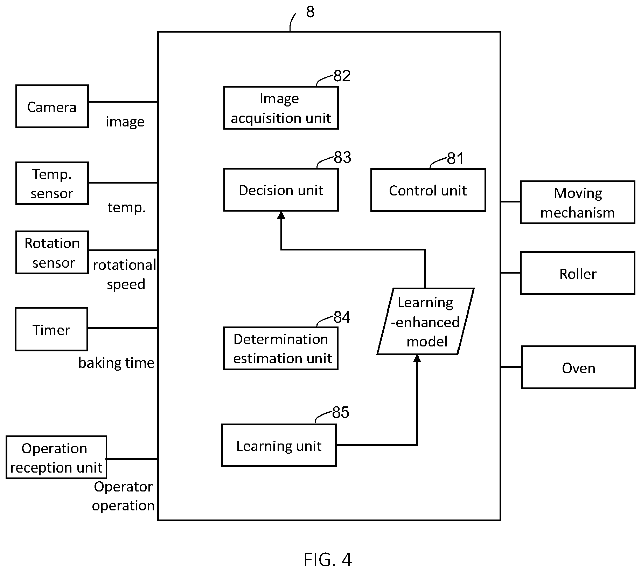

FIG. 4 is a functional block diagram illustrating an exemplary configuration of the control apparatus constituted by the computer 8. In the implementation shown in FIG. 4, the computer 8 includes a control unit 81, an image acquisition unit 82, a decision unit 83, a determination estimation unit 84, and a learning unit 85. The control unit 81 controls the moving mechanism (i.e., arms 5 and actuator 6). Thus, the control unit 81 controls an operation in which the roller 3 having layered Baumkuchen batter thereon is moved from the batter application position to the baking position for the oven 2 (i.e., operation of initiating baking) and an operation in which the roller is moved from the baking position for the oven 2 to the batter application position (i.e., operation of terminating baking). Further, the control unit 81 controls the rotation of the roller 3. Thus, the computer 8 controls the rotation of the roller 3 about the axis and the movement of the roller 3 in a direction perpendicular to the roller's axis. It will be understood that the control unit 81 may also control the heater 22 of the oven 2. That is, in some implementations, the computer 8 can control the oven 2.

The image acquisition unit 82 acquires, from the camera 7, a group of images of the outer peripheral surface of the batter rotating together with the roller 3 at the baking position for the oven 2, the group of images covering at least one entire turn. For example, the image acquisition unit 82 acquires, from the camera 7, a group of images of a portion of the outer peripheral surface of the batter captured at predetermined intervals. Each of the acquired images in the group may be an image of a portion of the batter covering part of the diameter, cut out from an image of the batter covering the entire diameter. The decision unit 83 decides on a point of time at which the roller 3 is to be moved from the baking position for the oven 2 to the batter application position based on the baked color of the outer peripheral surface of the batter indicated by the group of images acquired by the image acquisition unit 82. The decision unit 83 may use a learning-enhanced model for this decision process.

For example, the decision unit 83 uses a learning-enhanced model to perform a process in which an image of the outer peripheral surface of the batter is input and an evaluation value about doneness is output. The learning-enhanced model may be data generated by performing machine learning that uses, as teaching data, previous images of the outer peripheral surface of batter and the evaluation result.

The determination estimation unit 84 and learning unit 85 use data indicating an operator operation of the Baumkuchen baking machine 1 for baking and its result to perform machine learning to generate a learning-enhanced model. The determination estimation unit 84 estimates the operator's determination of the doneness of the batter of the Baumkuchen based on the operator's operation of the Baumkuchen baking machine 1. The learning unit 85 performs machine learning that uses, as teaching data, the estimated determination by the operator and the group of images of the outer peripheral surface of the batter at the time of that determination. The group of images that serve as teaching data may be a group of images of the outer peripheral surface of the batter at the baking position for the oven 2 covering at least one entire turn in a period of time that includes the time of the determination by the operator. The learning-enhanced model generated by machine learning is stored on a storage device accessible to the computer 8.

The computer 8 is connected to an operator operation reception unit included in the Baumkuchen baking machine 1. The operator operation reception unit receives an operator operation of the Baumkuchen baking machine 1 from the operator. The operator operation reception unit may be composed of, for example, an operator operation panel 91 and operator operation elements such as operator operation buttons 92, as shown in FIG. 1. The operator operation reception unit is capable of receiving an operation by the operator relating to, for example, the operation of the roller 3 and the temperature in the oven. Examples of operator operations received by the operator operation reception unit from the operator relating to the operation of the roller 3 include an operator operation for moving the roller 3 to the batter application position, an operator operation for moving the roller 3 from the batter application position to the baking position for the oven 2 (i.e., operation for initiating baking), an operator operation for moving the roller 3 from the baking position to the batter application position (i.e., operation for terminating baking), and an operator operation for controlling the rotational speed of the roller 3.

For example, the determination estimation unit 84 may estimate that the operator has determined that the doneness is insufficient, that is, baking is incomplete, if the operator did not perform an operation for moving the roller 3 from the baking position to the batter application position while the roller 3 with layered batter is rotating at the baking position for the oven 2. In this case, the images of the outer peripheral surface of the batter captured by the camera 7 during rotation of the roller 3 are linked with the determination that baking is incomplete, and stored as teaching data.

In contrast, for example, the determination estimation unit 84 may estimate that the operator has determined that the doneness is good if the operator performed an operation for moving the roller 3 from the baking position to the batter application position while the roller 3 with layered batter is rotating at the baking position for the oven 2. In this case, the images of the outer peripheral surface of the batter captured by the camera 7 during at least one turn of the roller 3 in a period of time including the time of the operator's operation are linked with the determination that baking has been properly completed, and stored as teaching data.

In the implementation shown in FIG. 4, a temperature sensor, a rotation sensor and a timer included in the Baumkuchen baking machine are connected to the computer 8. The decision unit 83 and learning unit 85 use information from detection by at least one of these sensors to perform the above-discussed decision or learning process. Specific examples of learning processes will be described further below.

The temperature sensor may be, for example, a thermometer that measures the temperature of air in the oven, a radiation thermometer that measures the temperature of the outer surface of the Baumkuchen, or may detect a temperature from output values of temperature, electric current and/or voltage, for example, from the heater 22.

For example, the rotation sensor may include a detector that optically, magnetically or mechanically detects movement of an detected element rotating together with the shaft of the roller 3. Alternatively, the rotation sensor may be configured to detect rotation of the roller 3 from output values from a motor that controls the rotation of the roller 3.

The timer may be part of the computer 8, for example. The timer may measure the baking time by, for example, measuring the elapsed time from the positioning of the roller 3 at the baking position.

The computer 8 constituting the control apparatus includes a processor and memory. The control apparatus may be composed of two or more computers. The process by the computer 8 for controlling the Baumkuchen baking machine is implemented by the processor performing a predetermined program. A program for causing the computer 8 to perform the control process and a non-transitory storage medium storing such a program are encompassed by the embodiments of the present invention. In the implementation shown in FIG. 1, the computer 8 is incorporated in the Baumkuchen baking machine 1. Alternatively, the computer 8 may be communicably connected over a network to a baker portion of the Baumkuchen baking machine 1, which includes the oven 2, roller 3 and moving mechanism.

### (Exemplary Control Process)

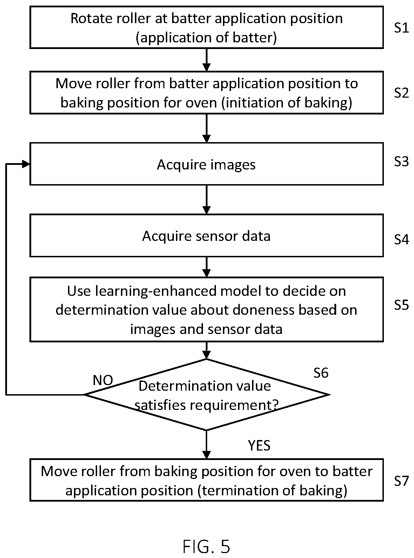

FIG. 5 is a flow chart illustrating an exemplary process for controlling the Baumkuchen baking machine 1 performed by the computer 8. In the exemplary implementation shown in FIG. 5, the computer 8 causes the Baumkuchen baking machine 1 to perform the operation of applying one layer of batter to the roller 3 and baking it. The computer 8 rotates the roller 3 at the batter application position, and applies one layer of batter to the outer peripheral surface of layered batter on the roller 3 (S1). Upon application, the computer 8 moves the roller 3 from the batter application position to the baking position for the oven 2 (S2). Thus, baking is initiated. During the baking step, the roller 3 with layered Baumkuchen batter is located at the baking position for the oven 2 and is rotated.

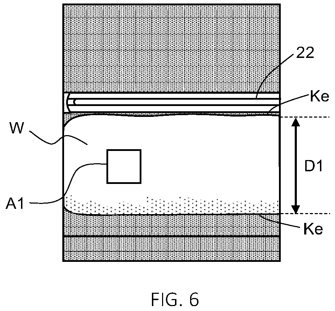

The computer 8 acquires, from the camera 7, an image of the outer peripheral surface of the batter rotating together with the roller 3 (S3). FIG. 6 illustrates an example of an image captured by the camera 7. In the example shown in FIG. 6, the camera 7 captures an image of a region of the layered batter K on the roller 3, the region covering part of its axial dimension and its entire diameter. From this image, the computer 8 cuts out an image of a central portion A1, as determined along the direction of the diameter, of the batter K and acquires it. That is, an image of a region of the batter that does not include the edges Ke, as determined along the direction of the diameter, of the batter K shown in the image is cut out. Thus, an image of that portion of the batter is obtained which best shows the doneness of the outer surface. For example, the color of portions of the batter that are close to the edges Ke, along the direction of the diameter, of the batter K shown in an image can easily be affected by light from the heater 22, and other factors. Cutting out an image of the central portion A1, as determined along the direction of the diameter, of the batter K enables acquiring an image of portions that are little affected by light of the heater 22 and other factors.

The computer 8 acquires sensor data in synchronization with acquisition of the image (S4). The sensor data includes, for example, the surface temperature of the outer surface of the Baumkuchen detected by the temperature sensor (i.e., radiation thermometer). Further, the sensor data acquired includes the baking time measured by the timer. The baking time means the elapsed time from the initiation of baking.

The computer 8 uses a learning-enhanced model to decide on a determination value about doneness based on the image acquired at step S3 and the sensor data acquired at step S4 (S5). That is, the computer 8 determines the doneness based on the baked color of the batter's outer surface indicated by the image, as well as the surface temperature of the batter and the baking time. The learning-enhanced model may be data generated by deep learning using a neural network. That is, the computer 8 may use an artificial intelligence technique using a neural network to determine the doneness from the image and sensor data.

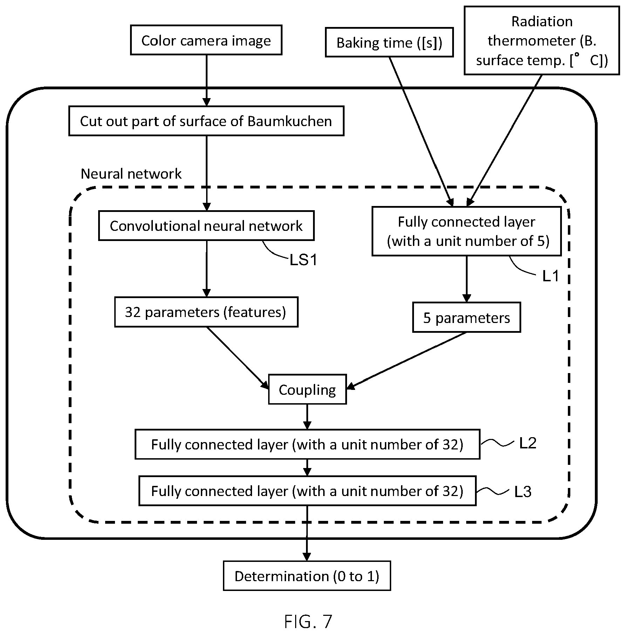

FIG. 7 illustrates an exemplary configuration of a neural network used for the decision process. In the implementation shown in FIG. 7, an image of a portion of the Baumkuchen surface is cut out from a color camera image. The cut-out image is input to a convolutional neural network LS1. The convolutional neural network LS1 outputs 32 parameters (i.e., features). Further, values of baking time and Baumkuchen surface temperature are input to a fully connected layer L1 with a unit number of 5, for example. This fully connected layer L1 outputs 5 parameters. The 32 parameters and the 5 parameters are coupled and then input to another fully connected layer L2. The output of the fully connected layer L2 is input to a subsequent fully connected layer L3, and the fully connected layer L3 outputs a determination value (e.g., 0 to 1).

In the implementation shown in FIG. 7, an image from the camera is input to a convolutional neural network, and sensor data is input to a fully connected layer. The image feature that has passed the convolutional neural network and the parameters of the sensor data that have passed the fully connected layer are coupled and then input to another fully connected layer. After this fully connected layer and yet another fully connected layer, a determination value about doneness is output. Thus, a machine learning model may be composed of a convolutional neural network that converts an input image into a feature, a first input layer that receives sensor data as input, a second input layer that receives, as input, parameters resulting from a combination of the image feature and the output of the input layer for sensor data, and a layer that further converts the output of the second input layer. Thus, using a neural network configured to combine an image and sensor data enables determination of doneness based on the image and sensor data. It will be understood that the neural network used for the determination process is not limited to the configuration shown in FIG. 7. For example, the number of fully connected layers and the number of parameters may be set appropriately as necessary. Further, the sensor data input to the fully connected layer L1 is not limited to the examples in FIG. 7. For example, at least one of the rotational speed of the roller 3, the temperature in the oven, and baking time may be input to the fully connected layer L1.

If the determination value about doneness decided on at step S5 satisfies a predetermined requirement (YES at step S6), the computer 8 moves the roller 3 from the baking position for the oven 2 to the batter application position and terminates baking. For example, if the determination value is not lower than a predetermined threshold, the computer 8 determines that baking is complete and causes the moving mechanism to perform the operation of removing the Baumkuchen from the oven.

If the determination value about doneness decided on at step S5 does not satisfy the predetermined requirement (NO at step S6), the computer 8 returns to step S3 and acquires an image, and repeats the process of steps S4 to S6. In the implementation shown in FIG. 5, the process for determining doneness is performed for each of the images in a group. Thus, for each of the images in the group captured during at least one turn of the roller 3, the determination of doneness and the process for deciding whether the baking is to be terminated based on the determination are performed.

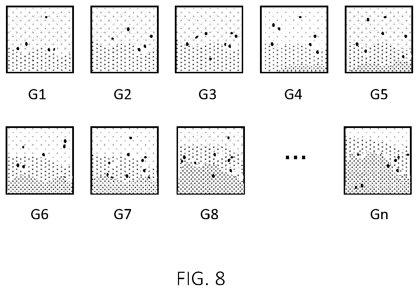

FIG. 8 illustrates an example of a group of images acquired by the computer 8 from the initiation until the completion of baking. For example, after initiation of baking, one image is captured by the camera 7 at predetermined intervals (for example, every 0.5 seconds). The computer 8 successively acquires images captured by the camera 7. In the example shown in FIG. 8, n images, G1 to Gn, are acquired. For images G1 to G(n-1), the determination value about doneness does not satisfy the requirement and, for the nth image Gn, the determination value about doneness satisfies the requirement. When the nth image Gn is acquired, baking is terminated.

In the above-discussed implementation, a determination of doneness and a decision on whether baking is to be terminated are performed for each image; alternatively, a determination of doneness and a decision about termination of baking may be done for a plurality of images.

Further, in the above-discussed implementation, the sensor data acquired represents baking time and temperature. The sensor data acquired by the computer may represent the rotational speed of layered Baumkuchen batter on the roller. At step S4 in FIG. 5, the computer 8 may acquire the rotational speed of the roller 3 detected by the rotation sensor. The computer 8 may determine doneness based on the images and on rotational speed. Further, the computer 8 may acquire the speed of circumferential movement of the outer peripheral surface of the Baumkuchen batter based on images from the camera 7 and on rotational speed.

For example, the diameter D1 of the outer periphery of the layered batter on the roller 3 can be measured in the image shown in FIG. 6. The diameter D1 obtained from the image and the rotational speed of the roller 3 acquired from the rotation sensor may be used to calculate the speed of circumferential movement of the outer peripheral surface of the batter. The computer 8 may use the speed of circumferential movement of the outer peripheral surface of the batter and the image to determine doneness. This enables a determination that takes account of changes in baking conditions that depend on the amount of layering of batter. Further, the computer 8 may use the diameter D1 and the image to determine doneness. In such implementations, too, a determination is possible that takes account of changes in baking conditions that depend on the amount of layering of batter.

### (Exemplary Learning Process)

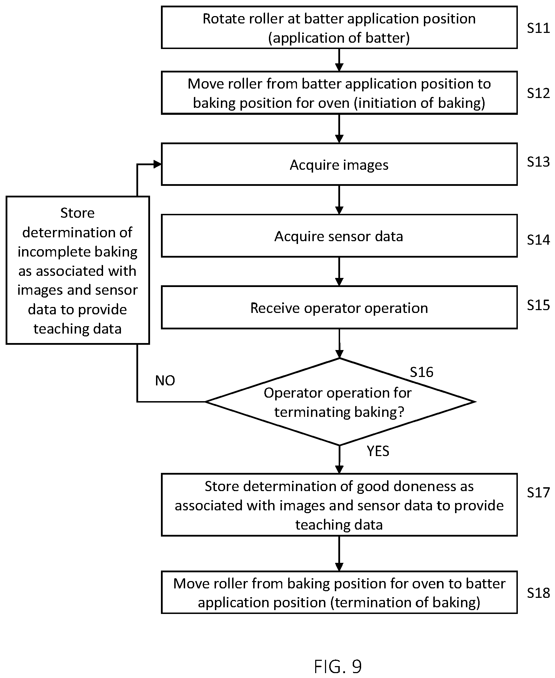

FIG. 9 is a flow chart illustrating an exemplary process for collecting teaching data for the learning process based on the baking operation on the Baumkuchen baking machine 1. In the exemplary implementation shown in FIG. 9, the Baumkuchen baking machine 1 applies one layer of batter to the roller 3 in accordance with operations by the operator and bakes it. In accordance with operations by the operator, the Baumkuchen baking machine 1 rotates the roller 3 at the batter application position and applies one layer of batter to the outer peripheral surface of layered batter on the roller 3 (S11). After application, in response to an operation by the operator, the roller 3 moves from the batter application position to the baking position for the oven 2 (S12). This initiates baking. During the baking step, the roller 3 with layered Baumkuchen batter is located at the baking position for the oven 2 and is rotated.

The computer 8 acquires, from the camera 7, an image of the outer peripheral surface of the batter rotating together with the roller 3 (S13). The process for acquiring an image may be performed, for example, in the same manner as at step S3 in FIG. 5. The computer 8 acquires sensor data in synchronization with acquisition of the image (S14). The sensor data acquired is from the same sensors from which data is acquired at step S5 in FIG. 5.

During baking of the Baumkuchen, the Baumkuchen baking machine 1 is ready to receive an operator operation for terminating baking (S15). Specifically, the operator is allowed to perform an operation on the Baumkuchen baking machine 1 for moving the roller 3 from the baking position to the batter application position at any moment within the period of time for which the roller 3 with layered batter is rotating at the baking position for the oven 2. When the operator performs an operation for moving the roller 3 from the baking position to the batter application position, baking is terminated.

During baking, if there is no operation by the operator for terminating baking for a predetermined period of time (NO at step S16), the computer 8 estimates that the operator has determined that baking is incomplete. In this case, the computer 8 links the determination that baking is incomplete with the image acquired at step S13 and the sensor data acquired at step S14 and stores them as teaching data on the storage device. Thereafter, the computer 8 performs the image acquisition process of step S13 once again, and repeats the process of steps S14 to S16. For example, the process of steps S13 to S16 is performed for each of the images in the group captured during at least one turn of the roller 3.

During baking, if there is an operation by the operator for terminating baking (YES at S16), the computer 8 estimates that the operator has determined that the doneness is good. In this case, the computer 8 links the determination that doneness is good with the image acquired at step S13 and the sensor data acquired at step S14 and stores them as teaching data on the storage device. The operator's operation for terminating baking is an operator operation for moving the roller 3 from the baking position to the batter application position. When the roller 3 is moved from the baking position, baking is terminated (S18).

As a result of the process shown in FIG. 9, a group of images of the rotating outer surface of the layered batter on the roller 3 that are covering at least one entire turn are linked with the determination of doneness and stored. The learning unit 85 of the computer 8 uses the determination of doneness linked with the group of images as teaching data to perform machine learning, and generates a learning-enhanced model. Although not limiting, the machine learning may be performed by deep learning using a neural network with the configuration shown in FIG. 7, for example.

By way of example, an exemplary learning process using a neural network model will be described. An image and sensor data that are to serve as teaching data are input to a model before learning, which provides output (i.e., determination result), and the learning unit 85 compares it with a determination result serving as teaching data to adjust the weights of different layers to further increase matching rate. For example, in the case of a model with the configuration shown in FIG. 7, a stored image is input as teaching data to the convolutional neural network LS1, and stored sensor data linked with this image (for example, baking time and surface temperature) are input to the fully connected layer L1. The output of the model in response to this input (i.e., determination value) is compared with the determination result serving as teaching data linked with the input image. The weighting parameters for different layers in the neural network are adjusted to increase the matching rate between the output of the model and the teaching data. Teaching data with a large number of images are used to perform the learning process to adjust the weighting parameters for the model. The model with weights that have been adjusted by the learning process represents a learning-enhanced model.

It will be understood that the learning process by the computer 8 is not limited to machine learning using a neural network. Other machine learning techniques may be used, such as those using regression analysis or decision tree.

For example, when a skilled pastry chef is operating the Baumkuchen baking machine 1 to bake a Baumkuchen, the computer 8 may link the determination estimated from the chef's operation with images and sensor data at the time of the determination and store them as teaching data. As machine learning is performed using stored teaching data about baking by a chef's operations, a learning-enhanced model can be generated that enables the same control of baking time that is done by this chef.

### (Other Variations)

In the above-described implementations, baking time (i.e., time at which the roller is to be moved from the baking position) is controlled based on the determination of doneness using images from the camera 7; alternatively, the value to be controlled by the computer 8 is not limited to baking time. For example, at least one of the rotational speed of the roller 3 and the temperature in the oven may be controlled based on a group of images of the outer peripheral surface of the Baumkuchen batter at the baking position for the oven captured by the camera 7, the group of images covering at least one entire turn. In such implementations, the computer 8 may use a learning-enhanced model generated by machine learning to decide, based on a group of images, how to control at least one of the rotation speed and the temperature in the oven. The learning-enhanced model may be, for example, a data set for performing a process in which an image of the outer peripheral surface of batter is input and at least one of rotational speed and oven temperature is output to serve as control information. The computer 8 uses, as teaching data, at least one of the rotational speed and oven temperature detected during a baking process that occurs as the operator operates the Baumkuchen baking machine, as well as images from the camera 7, to generate such learning-enhanced model as discussed above.

For example, the computer 8 may adjust the rotational speed of the roller 3 depending on changes over time in the diameter of the batter indicated by images captured by the camera 7 or on changes along the axial direction in the diameter (i.e., irregularities in shape on the outer peripheral surface). Alternatively, the computer 8 may adjust the heating power of the heater 22 of the oven 2 depending on the doneness determined based on images.

In addition to referring to a group of images, the computer 8 may decide how to control at least one of rotational speed and oven temperature, based on at least one of the rotational speed, baking time and oven temperature acquired when the group of images were acquired. This decision process may use a data set that, when at least one of rotational speed, baking time and oven temperature and images of the outer peripheral surface of batter are input as a learning-enhanced model, enables outputting of control information. Further, the computer 8 may generate such a learning-enhanced model based on operations by the operator of the Baumkuchen baking machine. For example, the computer 8 may detect an operation by the operator with respect to at least one of rotational speed and oven temperature, and generate a learning-enhanced model using, as teaching data, a group of images of the outer peripheral surface of the batter captured during a period including the time of detection of the operator operation and the detected operator operation. Examples of operator operations to be detected include, for example, an operation for adjusting the rotational speed of the roller 3 and an operation for adjusting the temperature in the oven 2.

Further, the sensor data used by the computer 8 for the decision process is not limited to the above-mentioned examples, i.e., rotational speed, oven temperature and baking time. One or two of them may be used for the decision process. Further, other sensor data may be used for the decision process. For example, in addition to images from the camera 7, the rotational speed of the roller 3 may be used in performing the decision process to enable a decision that considers changes in baking conditions that depend on rotational speed. Furthermore, in addition to images from the camera 7, oven temperature may be used in performing the decision process, which will enable a decision that considers changes in baking conditions that depend on oven temperature. Further, in addition to images from the camera 7, baking time may be used in performing the decision process, which will enable a decision that considers changes in baking time.

Furthermore, batter information relating to Baumkuchen batter may be used in the decision process. The batter information may include, for example, at least one of the temperature of batter in the batter container before application, batter type (including the type of inclusions in the batter, such as plain, chocolate, green tea, coffee, and strawberry), batter weight, batter volume, and batter density. For example, when acquiring a plurality of images of the outer surface of batter from the camera 7, the computer 8 may further acquire batter information relating to the batter. In such implementations, the computer 8, in the decision process, decides on a time at which the roller 3 is to be moved from the baking position for the oven to the batter application position based on the acquired batter information, in addition to the baked color of the outer peripheral surface of the batter indicated by the group of images.

A learning-enhanced model may be used for this decision process. For example, the learning-enhanced model may be data that, when an image of the outer peripheral surface of batter is input, enables outputting of the determination of doneness based on the baked color indicated by the image. The computer 8 may generate a learning-enhanced model by means of machine learning that uses, as teaching data, a determination by the operator regarding doneness estimated based on an operator operation of the Baumkuchen baking machine, batter information, and a group of images of the outer peripheral surface of the batter at the baking position for the oven covering at least one entire turn in a period of time including the time of determination.

The Baumkuchen baking machine 1 may include an input unit or sensor for acquiring batter information. The computer 8 may acquire batter information via the input unit or from the sensor. For example, the Baumkuchen baking machine 1 may be provided with at least one of a weight sensor that measures the weight of batter in the batter container 4, a batter temperature sensor that measures the temperature of batter in the batter container 4, and a volume sensor that measures the volume of batter in the batter container 4. Alternatively, the Baumkuchen baking machine 1 may be provided with an input unit that serves as an interface that receives, from the operator, batter information as input.

### EXPLANATION OF CHARACTERS

1: Baumkuchen baking machine
2: oven
3: roller
4: batter container
5: arms
6: actuator
7: camera

## Claims

1. A Baumkuchen baking machine (1) comprising:
an oven (2);
a batter container (4);
a roller (3) capable of moving between a baking position for the oven (2) and the batter container (4);
a camera (7) adapted to photograph a portion of an outer peripheral surface of layered batter of a Baumkuchen on the roller (3); and
a control apparatus comprising:
a computer (8) adapted to control movement of the roller (3) having layered batter of a Baumkuchen thereon from a batter application position for applying batter in the batter container (4) to batter on the roller (3) to the baking position for the oven (2) and movement of the roller (3) from the baking position for the oven (2) to the batter application position, the computer (8) being configured to perform:
an image acquisition process for acquiring, from the camera (7), a group of images of the outer peripheral surface of the batter rotating together with the roller (3) at the baking position for the oven (2), **characterized by** the group of images covering at least one entire turn; and
a decision process for deciding on a point of time at which the roller (3) is to be moved from the baking position for the oven to the batter application position based on a baked color of the outer peripheral surface of the batter indicated by the group of images of the outer peripheral surface of the batter at the baking position for the oven (2) covering at least one entire turn;
wherein the group of images contain information about the entire circumference of the outer peripheral surface of the batter of the Baumkuchen baked in the oven (2).

2. The Baumkuchen baking machine (1) according to claim 1, wherein the computer (8) is configured to further perform:
a determination estimation process for estimating a result of a determination by an operator regarding a doneness of the batter of a Baumkuchen based on an operation of the Baumkuchen baking machine (1) by the operator; and
a learning process for generating a learning-enhanced model to be used in the decision process by means of machine learning using, as teaching data, the estimated result of the determination by the operator and a group of images of the outer peripheral surface of the batter at the baking position for the oven covering at least one entire turn in a period of time including a time of the determination.

3. The Baumkuchen baking machine (1) according to claim 1 or 2, wherein, when acquiring the images, the computer (8) further acquires at least one of a rotational speed of the layered batter of a Baumkuchen on the roller (3), a baking time for the outer surface of the batter of a Baumkuchen, and a temperature in the oven (2), and, in the decision process, the computer (8) performs the decision based on at least one of the acquired rotational speed, the acquired baking time for the outer surface of the batter of a Baumkuchen, and the acquired temperature in the oven (2), in addition to the baked color of the outer peripheral surface of the batter indicated by the group of images.

4. The Baumkuchen baking machine (1) according to claim 2, wherein, in the learning process, the computer (8) generates the learning-enhanced model further using at least one of the rotational speed of the layered batter of a Baumkuchen on the roller (3), the baking time for the outer surface of the batter of a Baumkuchen, and the temperature in the oven (2) in the period of time including the time of the determination based on the operation by the operator.

5. The Baumkuchen baking machine (1) according to any one of claims 1 to 4, wherein, in the decision process, the computer (8) acquires at least one of a speed of circumferential movement of the outer peripheral surface of the layered batter of a Baumkuchen on the roller (3), and a diameter of the outer periphery of the layered batter of a Baumkuchen on the roller (3), and, in the decision process, the computer (8) performs the decision based on at least one of the acquired speed of circumferential movement and the acquired diameter in addition to the baked color of the outer peripheral surface of the batter indicated by the group of images.

6. The Baumkuchen baking machine (1) according to claim 2 or 4, wherein, in the learning process, the computer (8) generates the learning-enhanced model further using at least one of a speed of circumferential movement of the outer peripheral surface of the layered batter of a Baumkuchen on the roller (3), and a diameter of the outer periphery of the batter of a Baumkuchen in the period of time including the time of the determination by the operator regarding the doneness.

7. A method for controlling a Baumkuchen baking machine (1) including an oven (2), a batter container (4), and a roller capable of moving between a baking position for the oven (2) and the batter container (4), comprising:
a control step in which the computer (8) controls movement of the roller (3) having layered batter of a Baumkuchen thereon from a batter application position for applying batter in the batter container (4) to batter on the roller (3) to a baking position for the oven (2), and movement of the roller (3) from the baking position for the oven (2) to the batter application position,
wherein, in the control step, the computer performs:
an image acquisition process for acquiring, from a camera (7) photographing a portion of an outer peripheral surface of the layered batter of a Baumkuchen on the roller (3), a group of images of the outer peripheral surface of the batter rotating together with the roller (3) at the baking position for the oven, **characterized in that** the group of images covering at least one entire turn; and
a decision process for deciding on a point of time at which the roller (3) is to be moved from the baking position for the oven (2) to the batter application position based on a baked color of the outer peripheral surface of the batter indicated by the group of images of the outer peripheral surface of the batter at the baking position for the oven (2) covering at least one entire turn;
wherein the group of images contain information about the entire circumference of the outer peripheral surface of the batter of the Baumkuchen baked in the oven (2).

8. A method for controlling a Baumkuchen baking machine (1) according to claim 7 comprising:
a determination estimation step in which a computer (8) estimates a result of a determination by an operator regarding a doneness of batter of a Baumkuchen based on an operation by the operator of the Baumkuchen baking machine (1); and
a learning step in which the computer generates a learning-enhanced model to be used in the decision process by means of machine learning using, as teaching data, the estimated result of the determination by the operator and a group of images of an outer peripheral surface of the batter at the baking position for the oven (2), the group of images covering at least one entire turn in a period of time including a time of the determination.

## Patentansprüche

1. Baumkuchen-Backmaschine (1), die Folgendes umfasst:
einen Backofen (2);
einen Teigbehälter (4);
eine Walze (3), die sich zwischen einer Backposition für den Backofen (2) und dem Teigbehälter (4) bewegen kann;
eine Kamera (7), die angepasst ist, um einen Teil einer äußeren Umfangsfläche von geschichtetem Teig eines Baumkuchens auf der Walze (3) zu fotografieren; und
eine Steuerung, das Folgendes umfasst:
einen Computer (8), der angepasst ist, um die Bewegung der Walze (3), auf der sich geschichteter Teig eines Baumkuchens befindet, von einer Teigaufbringungsposition zum Aufbringen von Teig in dem Teigbehälter (4) auf Teig auf der Walze (3) zu der Backposition für den Backofen (2) und die Bewegung der Walze (3) von der Backposition für den Backofen (2) zu der Teigaufbringungsposition zu steuern,
wobei der Computer (8) konfiguriert ist, um Folgendes auszuführen:
einen Bilderhaltungsprozess, um von der Kamera (7) eine Gruppe von Bildern der äußeren Umfangsfläche des Teigs, der sich zusammen mit der Walze (3) in der Backposition für den Backofen (2) dreht, zu erhalten, **dadurch gekennzeichnet, dass** die Gruppe von Bildern mindestens eine gesamte Umdrehung abdeckt; und
einen Entscheidungsprozess, um über einen Zeitpunkt zu entscheiden, zu dem die Walze (3) von der Backposition für den Backofen zu der Teigaufbringungsposition bewegt werden soll, basierend auf einer gebackenen Farbe der äußeren Umfangsfläche des Teigs, die durch die Gruppe von Bildern der äußeren Umfangsfläche des Teigs in der Backposition für den Backofen (2), die mindestens eine gesamte Umdrehung umfasst, angezeigt wird;
wobei die Gruppe von Bildern Informationen über den gesamten Umfang der äußeren Umfangsfläche des Teigs des im Backofen (2) gebackenen Baumkuchens enthält.

2. Baumkuchen-Backmaschine (1) nach Anspruch 1, wobei der Computer (8) konfiguriert ist, um ferner Folgendes auszuführen:
einen Bestimmungsschätzungsprozess, um ein Ergebnis einer Bestimmung durch einen Bediener bezüglich eines Garzustandes des Teigs eines Baumkuchens zu schätzen, basierend auf einer Bedienung der Baumkuchen-Backmaschine (1) durch den Bediener; und
einen Lernprozess zum Erzeugen eines lernverbesserten Modells, das in dem Entscheidungsprozess mittels maschinellen Lernens verwendet werden soll, wobei als Lerndaten das geschätzte Ergebnis der Bestimmung durch den Bediener und eine Gruppe von Bildern der äußeren Umfangsfläche des Teigs in der Backposition für den Backofen, die mindestens eine gesamte Umdrehung in einer Zeitspanne einschließlich eines Zeitpunkts der Bestimmung abdecken, verwendet werden.

3. Baumkuchen-Backmaschine (1) nach Anspruch 1 oder 2, wobei der Computer (8) beim Erhalten der Bilder ferner mindestens eine Drehzahl des geschichteten Baumkuchenteigs auf der Walze (3), eine Backzeit für die Außenfläche des Baumkuchenteigs und eine Temperatur im Backofen (2) erfasst und im Entscheidungsprozess der Computer (8) die Entscheidung basierend auf mindestens einer der erfassten Drehzahl, der erfassten Backzeit für die Außenfläche des Baumkuchenteigs und der erfassten Temperatur in dem Backofen (2) zusätzlich zu der durch die Gruppe von Bildern angezeigten gebackenen Farbe der äußeren Umfangsfläche des Teigs durchführt.

4. Baumkuchen-Backmaschine (1) nach Anspruch 2, wobei der Computer (8) in dem Lernprozess das lernverbesserte Modell erzeugt, indem er ferner mindestens eines von der Drehzahl des geschichteten Baumkuchenteigs auf der Walze (3), der Backzeit für die Außenfläche des Baumkuchenteigs und der Temperatur im Backofen (2) im Zeitraum einschließlich des Zeitpunkts der Bestimmung basierend auf der Bedienung durch den Bediener nutzt.

5. Baumkuchen-Backmaschine (1) nach einem der Ansprüche 1 bis 4, wobei der Computer (8) im Entscheidungsprozess mindestens eine Umfangsbewegungsgeschwindigkeit der äußeren Umfangsfläche des geschichteten Baumkuchenteigs auf der Walze (3) und einen Durchmesser des äußeren Umfangs des geschichteten Baumkuchenteigs auf der Walze (3) erhält, und der Computer (8) im Entscheidungsprozess die Entscheidung basierend auf mindestens einem von der erfassten Geschwindigkeit der Umfangsbewegung und dem erfassten Durchmesser zusätzlich zu der durch die Gruppe von Bildern angezeigten gebackenen Farbe der äußeren Umfangsfläche des Teigs trifft.

6. Baumkuchen-Backmaschine (1) nach Anspruch 2 oder 4, wobei der Computer (8) im Lernprozess das lernverbesserte Modell erzeugt, indem er ferner mindestens eines von einer Geschwindigkeit der Umfangsbewegung der äußeren Umfangsfläche des geschichteten Baumkuchenteigs auf der Walze (3) und einem Durchmesser des äußeren Umfangs des Baumkuchenteigs in der Zeitspanne einschließlich des Zeitpunkts der Bestimmung des Garzustands durch den Bediener verwendet.

7. Verfahren zum Steuern einer Baumkuchen-Backmaschine (1) mit einem Backofen (2), einem Teigbehälter (4) und einer Walze, die sich zwischen einer Backposition für den Backofen (2) und dem Teigbehälter (4) bewegen kann, umfassend:
einen Steuerungsschritt, in dem der Computer (8) die Bewegung der Walze (3), auf der sich geschichteter Teig eines Baumkuchens befindet, von einer Teigaufbringungsposition zum Aufbringen von Teig in dem Teigbehälter (4) auf Teig auf der Walze (3) zu einer Backposition für den Backofen (2) und die Bewegung der Walze (3) von der Backposition für den Backofen (2) zu der Teigaufbringungsposition steuert, wobei der Computer in dem Steuerungsschritt Folgendes ausführt:
einen Bilderhaltungsprozess, um von einer Kamera (7), die einen Teil einer äußeren Umfangsfläche des geschichteten Baumkuchenteigs auf der Walze (3) fotografiert, eine Gruppe von Bildern der äußeren Umfangsfläche des Teigs, der sich zusammen mit der Walze (3) in der Backposition für den Backofen dreht, zu erhalten, **dadurch gekennzeichnet, dass** die Gruppe von Bildern mindestens eine gesamte Umdrehung abdeckt; und
einen Entscheidungsprozess, um über einen Zeitpunkt zu entscheiden, zu dem die Walze (3) von der Backposition für den Backofen (2) zu der Teigaufbringungsposition bewegt werden soll, basierend auf einer gebackenen Farbe der äußeren Umfangsfläche des Teigs, die durch die Gruppe von Bildern der äußeren Umfangsfläche des Teigs in der Backposition für den Backofen (2), die mindestens eine gesamte Umdrehung umfasst, angezeigt wird;
wobei die Gruppe von Bildern Informationen über den gesamten Umfang der äußeren Umfangsfläche des Teigs des im Backofen (2) gebackenen Baumkuchens enthält.

8. Verfahren zur Steuerung einer Baumkuchen-Backmaschine (1) nach Anspruch 7, umfassend:
einen Bestimmungsschätzungsschritt, in dem ein Computer (8) ein Ergebnis einer Bestimmung durch einen Bediener bezüglich eines Garzustandes des Teigs eines Baumkuchens basierend auf einer Bedienung der Baumkuchen-Backmaschine (1) durch den Bediener schätzt; und
einen Lernschritt, in dem der Computer ein lernverbessertes Modell erzeugt, das in dem Entscheidungsprozess mittels maschinellen Lernens verwendet werden soll, wobei als Lerndaten das geschätzte Ergebnis der Bestimmung durch den Bediener und eine Gruppe von Bildern einer äußeren Umfangsfläche des Teigs in der Backposition für den Backofen (2) verwendet werden, wobei die Gruppe von Bildern mindestens eine gesamte Umdrehung in einer Zeitspanne einschließlich eines Zeitpunkt der Bestimmung abdeckt.

## Revendications

1. Machine de cuisson pour gâteau Baumkuchen (1), comprenant :
un four (2) ;
un récipient pour pâte (4) ;
un rouleau (3) capable d'effectuer un mouvement entre une position de cuisson pour le four (2) et le récipient pour pâte (4) ;
une caméra (7) adaptée pour photographier une partie d'une surface périphérique extérieure de pâte en couches d'un gâteau Baumkuchen sur le rouleau (3) ; et
un appareil de commande comprenant :
un ordinateur (8) adapté pour commander le mouvement du rouleau (3) ayant une pâte en couches d'un gâteau Baumkuchen sur celui-ci depuis une position d'application de pâte, pour appliquer de la pâte dans le récipient pour pâte (4) pour couvrir de pâte le rouleau (3), jusqu'à la position de cuisson pour le four (2), et le mouvement du rouleau (3) depuis la position de cuisson pour le four (2) jusqu'à la position d'application de pâte,
l'ordinateur (8) étant configuré pour réaliser :
un processus d'acquisition d'image pour acquérir, à partir de la caméra (7), un groupe d'images de la surface périphérique extérieure de la pâte qui est en rotation conjointement avec le rouleau (3) à la position de cuisson pour le four (2), **caractérisée en ce que** le groupe d'images couvre au moins un tour entier ; et
un processus de décision pour prendre une décision concernant un instant auquel le rouleau (3) doit être mis en mouvement depuis la position de cuisson pour le four jusqu'à la position d'application de pâte sur la base d'une couleur de condition cuite de la surface périphérique extérieure de la pâte indiquée par le groupe d'images de la surface périphérique extérieure de la pâte à la position de cuisson pour le four (2) couvrant au moins un tour entier ;
dans laquelle le groupe d'images contient des informations concernant la circonférence entière de la surface périphérique extérieure de la pâte du gâteau Baumkuchen cuit dans le four (2).

2. Machine de cuisson pour gâteau Baumkuchen (1) selon la revendication 1, dans laquelle l'ordinateur (8) est configuré pour réaliser en outre :
un processus d'estimation de détermination pour estimer un résultat d'une détermination, par un opérateur, concernant une cuisson achevée de la pâte d'un gâteau Baumkuchen sur la base d'une opération de la machine de cuisson pour gâteau Baumkuchen (1) par l'opérateur ; et
un processus d'apprentissage pour générer un modèle amélioré par apprentissage, destiné à être utilisé dans le processus de décision, au moyen d'apprentissage machine en utilisant, en tant que données d'apprentissage, le résultat estimé de la détermination par l'opérateur et un groupe d'images de la surface périphérique extérieure de la pâte à la position de cuisson pour le four couvrant au moins un tour entier, durant une période incluant un moment de la détermination.

3. Machine de cuisson pour gâteau Baumkuchen (1) selon la revendication 1 ou 2,
dans laquelle, lors de l'acquisition des images, l'ordinateur (8) acquiert en outre au moins un d'une vitesse de rotation de la pâte en couches d'un gâteau Baumkuchen sur le rouleau (3), d'un temps de cuisson pour la surface extérieure de la pâte d'un gâteau Baumkuchen, et d'une température dans le four (2), et, dans le processus de décision, l'ordinateur (8) prend la décision sur la base d'au moins un de la vitesse de rotation acquise, du temps de cuisson acquis pour la surface extérieure de la pâte d'un gâteau Baumkuchen, et de la température acquise dans le four (2), en plus de la couleur de condition cuite de la surface périphérique extérieure de la pâte indiquée par le groupe d'images.

4. Machine de cuisson pour gâteau Baumkuchen (1) selon la revendication 2, dans laquelle, dans le processus d'apprentissage, l'ordinateur (8) génère le modèle amélioré par apprentissage en utilisant en outre au moins un de la vitesse de rotation de la pâte en couches d'un gâteau Baumkuchen sur le rouleau (3), du temps de cuisson pour la surface extérieure de la pâte d'un gâteau Baumkuchen, et de la température dans le four (2), durant la période incluant le moment de la détermination, sur la base de l'opération par l'opérateur.

5. Machine de cuisson pour gâteau Baumkuchen (1) selon l'une quelconque des revendications 1 à 4, dans laquelle, dans le processus de décision, l'ordinateur (8) acquiert au moins un d'une vitesse de mouvement circonférentiel de la surface périphérique extérieure de la pâte en couches d'un gâteau Baumkuchen sur le rouleau (3), et d'un diamètre de la périphérie extérieure de la pâte en couches d'un gâteau Baumkuchen sur le rouleau (3), et, dans le processus de décision, l'ordinateur (8) prend la décision sur la base d'au moins un de la vitesse acquise de mouvement circonférentiel et du diamètre acquis en plus de la couleur de condition cuite de la surface périphérique extérieure de la pâte indiquée par le groupe d'images.

6. Machine de cuisson pour gâteau Baumkuchen (1) selon la revendication 2 ou 4, dans laquelle, dans le processus d'apprentissage, l'ordinateur (8) génère le modèle amélioré par apprentissage en utilisant en outre au moins un d'une vitesse de mouvement circonférentiel de la surface périphérique extérieure de la pâte en couches d'un gâteau Baumkuchen sur le rouleau (3), et d'un diamètre de la périphérie extérieure de la pâte d'un gâteau Baumkuchen, durant la période incluant le moment de la détermination, par l'opérateur, concernant la cuisson achevée.

7. Procédé pour commander une machine de cuisson pour gâteau Baumkuchen (1) incluant un four (2), un récipient pour pâte (4), et un rouleau capable d'effectuer un mouvement entre une position de cuisson pour le four (2) et le récipient pour pâte (4), comprenant
une étape de commande dans laquelle l'ordinateur (8) commande un mouvement du rouleau (3), ayant de la pâte en couches d'un gâteau Baumkuchen sur celui-ci, depuis une position d'application de pâte, pour appliquer de la pâte dans le récipient pour pâte (4) pour couvrir de pâte le rouleau (3), jusqu'à une position de cuisson pour le four (2), et un mouvement du rouleau (3) depuis la position de cuisson pour le four (2) jusqu'à la position d'application de pâte,
dans lequel, dans l'étape de commande, l'ordinateur réalise :
un processus d'acquisition d'image pour acquérir, à partir d'une caméra (7) photographiant une partie d'une surface périphérique extérieure de la pâte en couches d'un gâteau Baumkuchen sur le rouleau (3), un groupe d'images de la surface périphérique extérieure de la pâte qui est en rotation conjointement avec le rouleau (3) à la position de cuisson pour le four, **caractérisé en ce que** le groupe d'images couvre au moins un tour entier ; et
un processus de décision pour prendre une décision concernant un instant auquel le rouleau (3) doit être mis en mouvement depuis la position de cuisson pour le four (2) jusqu'à la position d'application de pâte, sur la base d'une couleur de condition cuite de la surface périphérique extérieure de la pâte indiquée par le groupe d'images de la surface périphérique extérieure de la pâte à la position de cuisson pour le four (2) couvrant au moins un tour entier ;
dans lequel le groupe d'images contient des informations concernant la circonférence entière de la surface périphérique extérieure de la pâte du gâteau Baumkuchen cuit dans le four (2).

8. Procédé pour commander une machine de cuisson pour gâteau Baumkuchen (1) selon la revendication 7, comprenant :
une étape d'estimation de détermination dans laquelle un ordinateur (8) estime un résultat d'une détermination, par un opérateur, concernant une cuisson achevée de la pâte d'un gâteau Baumkuchen sur la base d'une opération par l'opérateur de la machine de cuisson pour gâteau Baumkuchen (1) ; et
un étape d'apprentissage dans laquelle l'ordinateur génère un modèle amélioré par apprentissage destiné à être utilisé dans le processus de décision au moyen d'apprentissage machine en utilisant, en tant que données d'apprentissage, le résultat estimé de la détermination par l'opérateur et un groupe d'images d'une surface périphérique extérieure de la pâte à la position de cuisson pour le four (2), le groupe d'images couvrant au moins un tour entier durant une période incluant un moment de la détermination.
